# EUROPÄISCHE PATENTANMELDUNG

(11) **EP 4 620 706 A1**
(43) Veröffentlichungstag der Anmeldung: **24.09.2025**
(21) Anmeldenummer: 25164490.2
(22) Anmeldetag: 18.03.2025
(51) Int. Cl.: B60D 1/02, B60D 1/26

(54) **ANHÄNGERKUPPLUNG**

(30) Priorität: 21.03.2024 AT 502542024
(71) Anmelder: Scharmüller, Christine, 4892 Fornach (AT)
(72) Erfinder: Scharmüller, Christine, 4892 Fornach (AT)
(74) Vertreter: Gibler & Poth Patentanwälte KG

(57) **Zusammenfassung**

Es wird eine Anhängerkupplung (1) zum Kuppeln mit einer Zugöse (34) und ein Verfahren zum Kuppeln der Anhängervorrichtung mit der Zugöse (34) vorgeschlagen. Die Anhängerkupplung umfasst einen zwischen einer Offen-Stellung (3) und einer Geschlossen-Stellung (4) bewegbaren Kupplungsbolzen (2), einen Aufnahmeraum (5) für die Zugöse (34), ein erstes Bolzenführungsteil (8), ein zweites Bolzenführungsteil (18), welches mit dem ersten Bolzenführungsteil (8) derart mechanisch verbunden ist, dass eine Schwenkbewegung des zweiten Bolzenführungsteils (18) zu einer entgegengesetzten Schwenkbewegung des ersten Bolzenführungsteils (8) führt, eine Auslösezunge (13) zur Betätigung eines Auslösemechanismus der Anhängerkupplung (1), einen Hebel (22) zum Überführen der Anhängerkupplung (1) von der Geschlossen-Stellung (4) in die Offen-Stellung (3), wobei der Hebel (22) mit einem zweiten Ende (10) des ersten Bolzenführungsteils (8) oder mit einem ersten Ende (19) des zweiten Bolzenführungsteils (18) zumindest mittelbar verbindbar ist.

## Beschreibung

Die Erfindung betrifft eine Anhängerkupplung gemäß dem Patentanspruch 1.

Es ist bekannt, dass Anhänger oder Arbeitsgeräte für Land- und forstwirtschaftliche Fahrzeuge mittels einer Anhängerkupplung an einer Zugmaschine, wie beispielsweise einem Traktor, angehängt und mit der Zugmaschine gezogen werden. Derartige Anhängerkupplungen sind dazu ausgelegt mit der Zugmaschine etliche Tonnen Anhängelast zu ziehen, wobei aufgrund des Gewichts des Anhängers oder des Arbeitsgeräts oftmals bereits das Kuppeln des Anhängers oder des Arbeitsgeräts mit der Zugmaschine eine aufwendige Angelegenheit ist.

Für das Kuppeln der Zugmaschine mit dem Anhänger oder dem Arbeitsgerät sind Anhängerkupplungen mit einem Kupplungsbolzen bekannt. Derartige Anhängerkupplungen können für gewöhnlich mit einem Handhebel oder einem Fußhebel betätigt werden, wobei der Kupplungsbolzen für gewöhnlich schwerkraftsbedingt oder durch Freilassen einer Vorspannung, beispielsweise durch eine Federkraft, bewegt wird.

Nachteilig an den bekannten Anhängerkupplungen ist, dass der an der Anhängerkupplung verwendete Hebel zur Betätigung des Kupplungsbolzens die Einbaulage der Anhängerkupplung an der Zugmaschine bestimmt. Für gewöhnlich sind bekannte Anhängerkupplungen mit einem Handhebel ausgestattet. Zur Verwendung eines Fußhebels wird die Anhängerkupplung um 180 Grad um die Horizontalachse, insbesondere Tiefenachse, gedreht. Diese Drehung beeinflusst jedoch die Funktionsweise der Anhängerkupplung, da in der Regel die Schwerkraft, welche auf den Kupplungsbolzen wirkt, das Schließen der Anhängerkupplung unterstützt. Bei der um 180 Grad gedrehten Anhängerkupplung muss daher eine zusätzliche Kraft aufgebracht werden, um den Kupplungsbolzen in die geöffnete Position der Anhängerkupplung zu bewegen, zu der die in der Anhängerkupplung enthaltenen Spannvorrichtungen, wie beispielsweise Federn, nicht ausgelegt sind. Dadurch kann es vorkommen, dass sich die Anhängerkupplung nicht vollständig öffnen lässt, wodurch einerseits das Kuppeln mit einer Zugöse und andererseits das Entkuppeln der Zugöse erschwert ist. Weiters kann die Wahl einer speziellen Hebelform, beispielsweise des Fußhebels, zu einer Reduktion der Bodenfreiheit an der Zugmaschine führen, welche insbesondere bei der landwirtschaftlichen Nutzung der Anhängerkupplung bei Durchfahrten durch Gräben oder durch Fahrten auf unbefestigten Straßen zu einem unerwünschten Aufsetzen der Anhängerkupplung auf den Boden führen kann, was auch zu Beschädigungen an der Anhängerkupplung führen kann.

Aufgabe der Erfindung ist es daher eine Anhängerkupplung der eingangs genannten Art anzugeben, mit welcher die genannten Nachteile vermieden werden können, mit welcher die Bodenfreiheit an einer Zugmaschine unabhängig von der Wahl des Hebels zum Öffnen der Anhängerkupplung gleich bleibt.

Erfindungsgemäß wird dies durch die Merkmale des Patentanspruches 1 erreicht.

Dadurch, dass die Anhängerkupplung ein zweites Bolzenführungsteil aufweist, welches zweite Bolzenführungsteil derart mit dem ersten Bolzenführungsteil verbunden ist, dass eine Schwenkbewegung des zweiten Bolzenführungsteils um die zweite Drehachse zu einer entgegengesetzten Schwenkbewegung des ersten Bolzenführungsteils um die erste Drehachse führt, kann der Hebel wahlweise mit dem zweiten Ende des ersten Bolzenführungsteils oder mit dem ersten Ende des zweiten Bolzenführungsteils zumindest mittelbar verbunden werden, um den Kupplungsbolzen von der Geschlossen-Stellung in die Offen-Stellung zu bewegen. Dadurch kann lediglich eine Einbaulage der Anhängerkupplung an einer Zugmaschine verwendet werden, unabhängig davon, ob ein Handhebel oder ein Fußhebel oder zwei Hebel für das Öffnen der Anhängerkupplung verwendet werden. Dadurch wird die Bodenfreiheit, also der Abstand der Anhängerkupplung bis zu einem Boden bzw. Untergrund, nicht durch die Wahl einer bestimmten Hebelart, wie beispielsweise eines Fußhebels, reduziert. Dadurch, dass die Einbaulage nicht zu einer Reduktion der Bodenfreiheit an der Zugmaschine führt, kann die Gefahr einer Beschädigung der Anhängerkupplung durch ein Aufsetzen auf einem Boden reduziert werden.

Weiters kann dadurch, dass der Hebel mit dem zweiten Ende des ersten Bolzenführungsteils oder mit dem ersten Ende des zweiten Bolzenführungsteils verbunden werden kann, bei einem Klemmen der Mechanik im Inneren der Anhängerkupplung der Hebel an einer zweiten Stelle angesetzt werden und so eine zusätzliche Kraft zum Bewegen des Kupplungsbolzens aufgebracht werden. Hierzu kann beispielsweise aufgrund der erfindungsgemäßen Ausbildung mit den zwei Bolzenführungsteilen auch ein zweiter Hebel zum Öffnen der Anhängerkupplung verwendet werden, wodurch das Öffnen der Anhängerkupplung bei einem Klemmen der Mechanik für den Hebel oder für den Kupplungsbolzen aufgrund langjähriger Beanspruchung erleichtert werden kann. Dadurch kann zusammengefasst das Kuppeln mit einer Zugöse erleichtert und die Verletzungsgefahr beim Öffnen der Anhängerkupplung reduziert werden.

Die Erfindung betrifft weiters ein Kupplungssystem gemäß dem Patentanspruch 9.

Die Erfindung betrifft weiters ein Verfahren zum Kuppeln einer Zugöse mit der erfindungsgemäßen Anhängerkupplung gemäß dem Patentanspruch 10.

Die Erfindung hat daher weiters die Aufgabe ein Verfahren der eingangs genannten Art anzugeben, mit welchem die genannten Nachteile vermieden werden können, mit welchem das Kuppeln einer Zugöse mit der Anhängerkupplung erleichtert wird und dabei die Bodenfreiheit an einer Zugmaschine unabhängig von der Wahl des Hebels zum Öffnen der Anhängerkupplung gleich bleibt.

Erfindungsgemäß wird dies durch die Merkmale des Patentanspruches 10 erreicht.

Die Vorteile des Verfahrens entsprechen den Vorteilen der oben genannten Anhängerkupplung.

Die Unteransprüche betreffen weitere vorteilhafte Ausgestaltungen der Erfindung.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 eine Anhängerkupplung aus dem Stand der Technik mit einem Handhebel in axonometrischer Vorderansicht,
Fig. 2 die in Fig. 1 gezeigte Anhängerkupplung mit einem Fußhebel anstatt des Handhebels in axonometrischer Vorderansicht,
Fig. 3 eine bevorzugte Ausführungsform der erfindungsgemäßen Anhängerkupplung in axonometrischer Vorderansicht,
Fig. 4 die in Fig.3 gezeigte bevorzugte Ausführungsform der Anhängerkupplung in axonometrischer Rückansicht,
Fig. 5 eine bevorzugte Ausführungsform eines ersten Bolzenführungsteils,
Fig. 6 eine bevorzugte Ausführungsform eines zweiten Bolzenführungsteils,
Fig. 7 eine Seitenansicht von links der in Fig. 3 gezeigten bevorzugten Ausführungsform der Anhängerkupplung,
Fig. 8 einen Längsschnitt der Anhängerkupplung mit der Anhängerkupplung in Offen-Stellung, und
Fig. 9 einen Längsschnitt des Kupplungssystems mit der Anhängerkupplung in Geschlossen-Stellung und einer mit der Anhängerkupplung gekuppelten Zugöse.

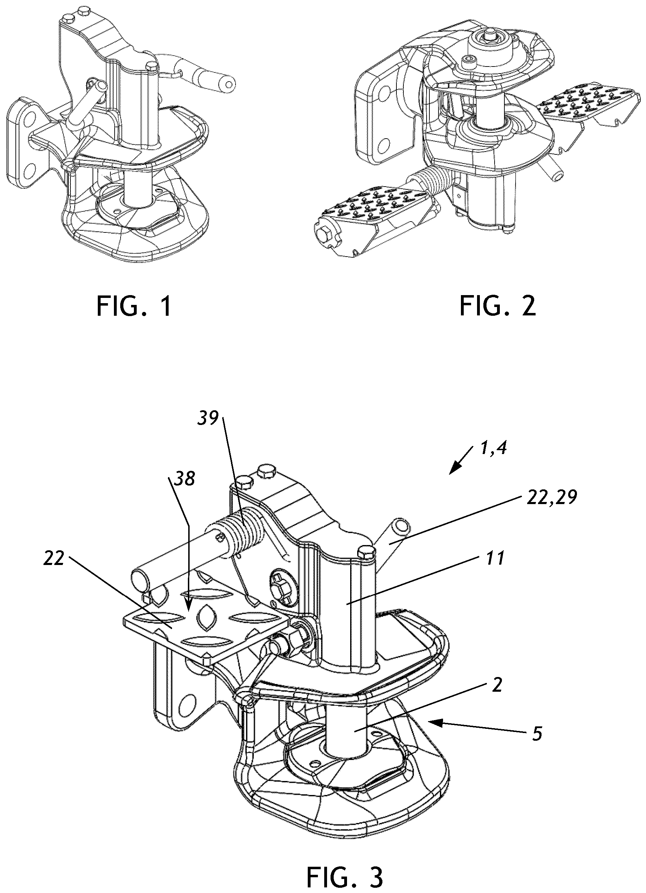

Die Fig. 1 und 2 zeigen eine aus dem Stand der Technik bekannte Anhängerkupplung. In Fig. 1 ist die Anhängerkupplung mit einem Handhebel gezeigt, wobei in Fig. 2 der Handhebel durch einen Fußhebel ersetzt wurde. Durch die Änderung des Hebels zum Öffnen der Anhängerkupplung muss die Anhängerkupplung mit einer anderen Einbaulage an einer Zugmaschine befestigt werden. Wie aus Fig. 2 deutlich hervorgeht, reduziert sich dadurch die Bodenfreiheit an der Zugmaschine deutlich. Wie aus Fig. 2 weiters hervorgeht, muss der Fuß einer Person zum Öffnen der Anhängerkupplung unterhalb des Kupplungsbolzens angesetzt werden. Wenn auf die Zugöse eine seitliche Kraft wirkt, beispielsweise weil der gekuppelte Anhänger schief steht, kann das Auskuppeln zu einer Verletzung an dem Fuß der Person führen, welche die Anhängerkupplung öffnet.

Die Fig. 3 bis 9 zeigen zumindest Teile bevorzugter Ausführungsformen einer Anhängerkupplung 1 zum Kuppeln mit einer Zugöse 34, umfassend
- einen Kupplungsbolzen 2, wobei der Kupplungsbolzen 2 zwischen einer Offen-Stellung 3 der Anhängerkupplung 1 und einer Geschlossen-Stellung 4 der Anhängerkupplung 1bewegbar ist,
- einen Aufnahmeraum 5 für die Zugöse 34, wobei in der Geschlossen-Stellung 4 der Kupplungsbolzen 2 von einer ersten Seite 6 des Aufnahmeraums 5 bis zu einer zweiten Seite 7 des Aufnahmeraums 5 reicht, wobei in der Offen-Stellung 3 der Kupplungsbolzen 2 den Aufnahmeraum 5 für die Zugöse 34 freigibt,
- ein erstes Bolzenführungsteil 8, wobei ein erstes Ende 9 des ersten Bolzenführungsteils 8 zumindest mittelbar mit dem Kupplungsbolzen 2 verbunden ist, wobei ein zweites Ende 10 des ersten Bolzenführungsteils 8 zum Bewegen des Kupplungsbolzens 2 gegenüber einem Gehäuse 11 der Anhängerkupplung 1 um eine erste Drehachse 12 schwenkbar gelagert ist,
- eine Auslösezunge 13 zur Betätigung eines Auslösemechanismus der Anhängerkupplung 1, wobei ein Ende 14 der Auslösezunge 13 gegenüber dem Gehäuse 11 der Anhängerkupplung 1 schwenkbar gelagert ist, wobei der Auslösemechanismus durch eine Schwenkbewegung der Auslösezunge 13 betätigbar ist, wobei an dem Ende 14 der Auslösezunge 13 ein Fortsatz 15 angeordnet ist, wobei in der Offen-Stellung 3
   - ein Abschnitt 16 der Auslösezunge 13 in dem Aufnahmeraum 5 angeordnet ist, und
   - der Fortsatz 15 in eine an dem zweiten Ende 10 des ersten Bolzenführungsteils 8 angeordnete Vertiefung 17 eingerastet ist und den Kupplungsbolzen 2 in der Offen-Stellung 3 fixiert,
   wobei der eingerastete Fortsatz 15 - bei einer Betätigung des Auslösemechanismus der Anhängerkupplung 1 - lösbar ist und die Anhängerkupplung 1 von der Offen-Stellung 3 in die Geschlossen-Stellung 4 überführbar ist,
- ein zweites Bolzenführungsteil 18, wobei ein erstes Ende 19 des zweiten Bolzenführungsteils 18 gegenüber dem Gehäuse 11 um eine zweite Drehachse 20 schwenkbar gelagert ist, wobei ein zweites Ende 21 des zweiten Bolzenführungsteils 18 mit dem zweiten Ende 10 des ersten Bolzenführungsteils 8 derart mechanisch verbunden ist, dass eine Schwenkbewegung des zweiten Bolzenführungsteils 18 um die zweite Drehachse 20 zu einer entgegengesetzten Schwenkbewegung des ersten Bolzenführungsteils 8 um die erste Drehachse 12 führt,
- einen Hebel 22 zum Überführen der Anhängerkupplung 1 von der Geschlossen-Stellung 4 in die Offen-Stellung 3, wobei der Hebel 22 zum Ausführen einer Schwenkbewegung des ersten und des zweiten Bolzenführungsteils 8, 18 mit dem zweiten Ende 10 des ersten Bolzenführungsteils 8 oder mit dem ersten Ende 19 des zweiten Bolzenführungsteils 18 zumindest mittelbar verbindbar ist.

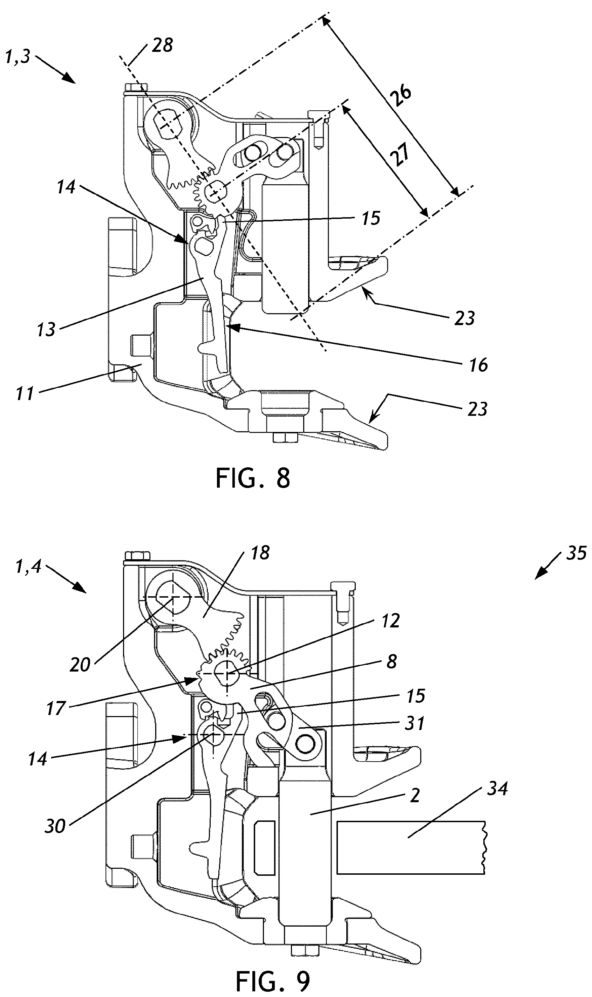

Die Fig. 9 zeigt weiters zumindest Teile eines Kupplungssystems 35 umfassend die erfindungsgemäße Anhängerkupplung 1 und eine Zugöse 34, wobei der Kupplungsbolzen 2 der Anhängerkupplung 1 in der Geschlossen-Stellung 4 innerhalb eines Kupplungslochs der Zugöse 34 angeordnet ist.

Die Erfindung betrifft weiters eine Verfahren zum Kuppeln einer Zugöse 34 mit der erfindungsgemäßen Anhängerkupplung 1, wobei der Hebel 22 mit dem zweiten Ende 10 des ersten Bolzenführungsteils 8 oder mit dem ersten Ende 19 des zweiten Bolzenführungsteils 18 zumindest mittelbar verbunden wird, wobei durch Betätigung des Hebels 22 der Kupplungsbolzen 2 von der Geschlossen-Stellung 4 der Anhängerkupplung 1 in die Offen-Stellung 3 der Anhängerkupplung 1 überführt wird, wobei die Zugöse 34 in den Aufnahmeraum 5 hineingeführt wird und gegen den Abschnitt 16 der Auslösezunge 13 in dem Aufnahmeraum 5 stößt, wobei durch den Stoß der Zugöse 34 gegen die Auslösezunge 13 eine Schwenkbewegung der Auslösezunge 13 verursacht wird und der eingerastete Fortsatz 15 gelöst wird, wobei durch das Lösen des Fortsatzes 15 der Kupplungsbolzen 2 von der Offen-Stellung 3 in die Geschlossen-Stellung 4 überführt wird und dabei innerhalb eines Kupplungslochs der Zugöse 34 angeordnet wird.

Dadurch, dass die Anhängerkupplung 1 ein zweites Bolzenführungsteil 18 aufweist, welches zweite Bolzenführungsteil 18 derart mit dem ersten Bolzenführungsteil 8 verbunden ist, dass eine Schwenkbewegung des zweiten Bolzenführungsteils 18 um die zweite Drehachse 20 zu einer entgegengesetzten Schwenkbewegung des ersten Bolzenführungsteils 8 um die erste Drehachse 12 führt, kann der Hebel 22 wahlweise mit dem zweiten Ende 10 des ersten Bolzenführungsteils 8 oder mit dem ersten Ende 19 des zweiten Bolzenführungsteils 18 zumindest mittelbar verbunden werden, um den Kupplungsbolzen 2 von der Geschlossen-Stellung 4 in die Offen-Stellung 3 zu bewegen. Dadurch kann lediglich eine Einbaulage der Anhängerkupplung 1 an einer Zugmaschine verwendet werden, unabhängig davon, ob ein Handhebel oder ein Fußhebel oder zwei Hebel 22 für das Öffnen der Anhängerkupplung 1 verwendet werden. Dadurch wird die Bodenfreiheit, also der Abstand der Anhängerkupplung 1 bis zu einem Boden, nicht durch die Wahl einer bestimmten Hebelart, wie beispielsweise eines Fußhebels, reduziert. Dadurch, dass die Einbaulage nicht zu einer Reduktion der Bodenfreiheit an der Zugmaschine führt, kann die Gefahr einer Beschädigung der Anhängerkupplung 1 durch ein Aufsetzen auf einem Boden bzw. einem Untergrund reduziert werden.

Weiters kann dadurch, dass der Hebel 22 mit dem zweiten Ende 10 des ersten Bolzenführungsteils 8 oder mit dem ersten Ende 19 des zweiten Bolzenführungsteils 18 verbunden werden kann, bei einem Klemmen der Mechanik im Inneren der Anhängerkupplung 1 der Hebel 22 an einer zweiten Stelle angesetzt werden und so eine zusätzliche Kraft zum Bewegen des Kupplungsbolzens 2 aufgebracht werden. Hierzu kann beispielsweise aufgrund der erfindungsgemäßen Ausbildung mit den zwei Bolzenführungsteilen 18 auch ein zweiter Hebel 29 zum Öffnen der Anhängerkupplung 1 verwendet werden, wodurch das Öffnen der Anhängerkupplung 1 bei einem Klemmen der Mechanik für den Hebel 22 oder für den Kupplungsbolzen 2 aufgrund langjähriger Beanspruchung erleichtert werden kann. Dadurch kann zusammengefasst das Kuppeln mit einer Zugöse 34 erleichtert und die Verletzungsgefahr beim Öffnen der Anhängerkupplung 1 reduziert werden.

Die Anhängerkupplung 1 ist eine Vorrichtung zum Kuppeln eines Fahrzeuges oder einer Zugmaschine, vorzugsweise einem Flurförderfahrzeug bzw. einem Anhänger aus einem Flurförderfahrzeug-Zug, oder einem Traktor, einen Lastkraftwagen (Lkw) oder einen Personenkraftwagen (Pkw), mit einem Anhänger oder einem Arbeitsgerät. Als Arbeitsgerät kann beispielsweise eine Ballenpresse, ein Güllefassanhänger, ein Bodenbearbeitungsgerät oder ähnliches verstanden werden. Für die Kupplung des Anhängers oder des Arbeitsgeräts mit der Anhängerkupplung 1 weist der Anhänger oder das Arbeitsgerät eine Zugöse 34 auf, welche mit dem Kupplungsbolzen 2 der Anhängerkupplung 1 verbunden wird. In einem gekuppelten Zustand der Anhängerkupplung 1 mit der Zugöse 34 ist der Kupplungsbolzen 2 in der Geschlossen-Stellung 4 der Anhängerkupplung 1 innerhalb eines Kupplungslochs der Zugöse 34 angeordnet. Dies ist beispielhaft in Fig. 9 ersichtlich.

Die Anhängerkupplung 1 weist zum Kuppeln mit der Zugöse 34 den Kupplungsbolzen 2 auf und kann daher auch als Bolzenkupplung bezeichnet werden.

Die Anhängerkupplung 1 ist dazu ausgebildet, den Anhänger oder das Arbeitsgerät vollautomatisch zu kuppeln. Eine vollautomatische Anhängerkupplung 1 weist einen automatisch selbstschließenden Vorgang beim Einkuppeln auf. Dieser Vorgang wird durch die Auslösemechanik der Anhängerkupplung 1 ausgelöst.

Die Zugöse 34 ist ein bekanntes Bauteil in der Land- und Forstwirtschaft. Ein Fachmann auf diesem Gebiet weiß, was eine Zugöse 34 ist, sowie wie diese zum Kuppeln mit der Anhängerkupplung 1 auszubilden ist, weshalb auf eine detailliertere Beschreibung der Zugöse 34 verzichtet wird.

Die Anhängerkupplung 1 ist bevorzugt eine Anhängerkupplung 1 für Flurförderfahrzeuge sowie für Land- und forstwirtschaftliche Fahrzeuge. Die Anhängerkupplung 1 ist dazu ausgelegt etliche Tonnen Anhängelast, insbesondere mindestens zwei Tonnen Anhängelast, vorzugsweise mindestens vier Tonnen Anhängelast, ziehen zu können.

Bevorzugt ist die Anhängerkupplung 1 umfassend Metall ausgebildet.

Die Anhängerkupplung 1 weist eine Offen-Stellung 3 und eine Geschlossen-Stellung 4 auf. In Fig. 8 und 9 sind Längsschnitte einer bevorzugten Ausführungsform der Anhängerkupplung 1 gezeigt, wobei Fig. 8 die Offen-Stellung 3 und Fig. 9 die Geschlossen-Stellung 4 zeigen.

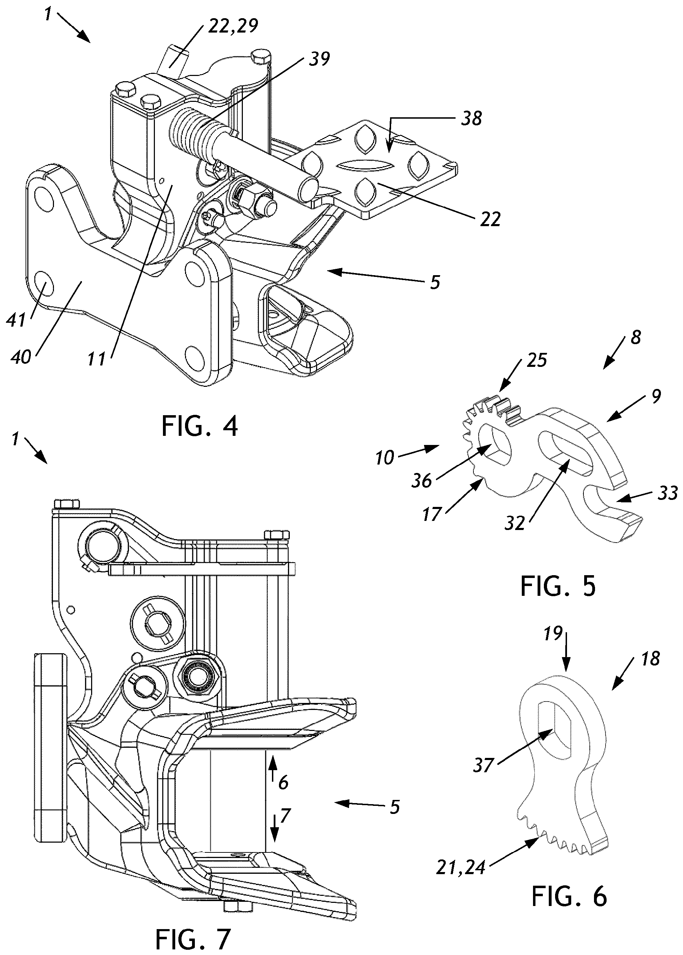

In der Geschlossen-Stellung 4 reicht der Kupplungsbolzen 2 von der ersten Seite 6 des Aufnahmeraums 5 bis zur zweiten Seite 7 des Aufnahmeraums 5. Die erste Seite 6 und die zweite Seite 7 des Aufnahmeraums 5 ist in der Fig. 7 eingezeichnet. Wie in Fig. 9 ersichtlich ist, ist eine Zugöse 34 mit der Anhängerkupplung 1 gekuppelt. Die Anhängerkupplung 1 befindet sich in der Geschlossen-Stellung 4.

Zum Kuppeln der Zugöse 34 mit der Anhängerkupplung 1 muss die Anhängerkupplung 1 geöffnet werden. Dazu muss der Kupplungsbolzen 2 in die Offen-Stellung 3 der Anhängerkupplung 1 bewegt werden. Dies wird erfindungsgemäß mit Hilfe des Hebels 22 durchgeführt.

Der Hebel 22 kann erfindungsgemäß entweder mit dem zweiten Ende 10 des ersten Bolzenführungsteils 8 oder mit ersten Ende 19 des zweiten Bolzenführungsteils 18 verbunden werden, um eine jeweilige Schwenkbewegung der zwei Bolzenführungsteile 8, 18 zu bewirken. Durch die Schwenkbewegungen der zwei Bolzenführungsteile 8, 18 wird der Kupplungsbolzen 2 in die Offen-Stellung 3 gebracht, insbesondere gezogen. Durch das Überführen in die Offen-Stellung 3 rastet der Fortsatz 15 der Auslösezunge 13 in die Vertiefung 17 des ersten Bolzenführungsteils 8 ein.

In der Offen-Stellung 3 gibt der Kupplungsbolzen 2 den Aufnahmeraum 5 für die Zugöse 34 frei. Die Zugöse 34 kann dann zu dem Abschnitt 16 der Auslösezunge 13 geführt werden, insbesondere gegen den Abschnitt 16 der Auslösezunge 13 beim Hineinführen in den Aufnahmeraum 5 stoßen, und dabei den Auslösemechanismus der Anhängerkupplung 1 betätigen.

Der Auslösemechanismus wird durch eine Schwenkbewegung der Auslösezunge 13 betätigt. Die Schwenkbewegung der Auslösezunge 13 wird bevorzugt um eine dritte Drehachse 30 ausgeführt. Die dritte Drehachse 30 ist in Fig. 9 beispielhaft gezeigt. Durch die Schwenkbewegung der Auslösezunge 13 wird der eingerastete Fortsatz 15 gelöst und der Kupplungsbolzen 2 wird, beispielsweise aufgrund der Schwerkraft oder durch eine mechanische Vorspannung, insbesondere einer Federkraft, von der Offen-Stellung 3 in die Geschlossen-Stellung 4 überführt. Nachdem der Kupplungsbolzen 2 dadurch innerhalb eines Kupplungslochs der Zugöse 34 angeordnet wird, wird die Zugöse 34 mit der Anhängerkupplung 1 gekuppelt. Der gekuppelte Zustand kann wieder gelöst werden, indem die Anhängerkupplung 1 durch Betätigung des Hebels 22 von der Geschlossen-Stellung 4 in die Offen-Stellung 3 gebracht wird.

Der Aufnahmeraum 5 ist ein Raum, welcher zur Aufnahme der Zugöse 34 geeignet ist. Bevorzugt kann der Aufnahmeraum 5 auch als Zugmaul oder als Fangmaul bezeichnet werden.

Besonders bevorzugt kann vorgesehen sein, dass an der ersten und an der zweiten Seite 6, 7 des Aufnahmeraums 5 jeweils eine Führungsfläche 23 für die Zugöse 34 angeordnet ist. In den Fig. 3, 4 und 7 bis 9 sind beispielhaft zwei gegenüberliegend und beabstandet zueinander angeordnete Führungsflächen 23 ersichtlich, wobei zur Übersichtlichkeit der Figuren lediglich in Fig. 8 die Führungsflächen 23 mit den Bezugszeichen 23 versehen wurden.

Bevorzugt kann der Flächeninhalt der Führungsflächen 23 im Wesentlich gleich groß sein. In den Fig. 3, 4 und 7 bis 9 sind lediglich zwei im Wesentlichen gleich große Führungsflächen 23 gezeigt. Durch diese zwei im Wesentlichen gleich großen Führungsflächen 23 wird einerseits das Hineinführen der Zugöse 34 in den Aufnahmeraum 5 und das Kuppeln der Zugöse 34 mit der Anhängerkupplung 1 erleichtert und andererseits der horizontale Schwenkbereich des mit der Anhängerkupplung 1 gekuppelten Anhängers, insbesondere durch das Fehlen zweier seitlichen Führungsflächen, nicht verkleinert. Dadurch kann ein einfach und reduzierter Aufbau der Anhängerkupplung 1 erreicht werden, welche auch Wartungsarbeiten an der Anhängerkupplung 1 aufgrund einfacher Zugänglichkeit erleichtert.

Bevorzugt kann die Anhängerkupplung 1 vier Führungsflächen 23 aufweisen. Bevorzugt sind jeweils zwei Führungsflächen 23 der vier Führungsflächen 23 gegenüberliegend und beabstandet zueinander angeordnet. Bevorzugt ist der Aufnahmeraum 5 mittels der vier Führungsflächen 23 im Wesentlichen trichterförmig ausgebildet. Dadurch kann das Hineinführen der Zugöse 34 in den Aufnahmeraum 5 zusätzlich erleichtert werden.

Bevorzugt sind die Führungsflächen 23 umfassend Metall, insbesondere aus Metall, ausgebildet.

Die Auslösezunge 13 ist bevorzugt ein längliches Bauteil. Die Auslösezunge 13 weist ein Ende 14 auf, welches Ende 14 gegenüber dem Gehäuse 11 der Anhängerkupplung 1 schwenkbar gelagert ist. Bevorzugt ist das Ende 14 gegenüber dem Gehäuse 11 der Anhängerkupplung 1 um die dritte Drehachse 30 schwenkbar gelagert. Die dritte Drehachse 30 ist in Fig. 9 beispielhaft eingezeichnet.

Bevorzugt kann die Auslösezunge 13, insbesondere der Abschnitt 16 der Auslösezunge 13, mittles einer Feder mit dem Gehäuse 11 verbunden sein. Dadurch kann über die Feder eine Federkraft auf den Abschnitt 16 der Auslösezunge 13 aufgebracht werden, sodass der Abschnitt 16 Richtung des Aufnahmeraums 5 gedrückt, insbesondere in den Aufnahmeraum 5 gedrückt, werden kann. Dadurch kann erreicht werden, dass bei Betätigung des Hebels 22 und des Überführens der Anhängerkupplung 1 von der Geschlossen-Stellung 4 in die Offen-Stellung 3 der Abschnitt 16 der Auslösezunge 13 in den Aufnahmeraum 5 gedrückt wird, sodass die Zugöse 34 den Auslösemechanismus der Anhängerkupplung 1 betätigen kann.

In den Fig. 8 und 9 ist das Ende 14 der Auslösezunge 13 beispielhaft gezeigt, wobei an dem Ende 14 der Fortsatz 15 angeordnet ist. Bevorzugt ist der Fortsatz 15 an die Auslösezunge 13 angeformt. Beispielsweise kann die Auslösezunge 13 ein Spritzgussteil sein, wobei durch den Spritzguss der Fortsatz 15 geformt wird.

Bevorzugt kann das Ende 14 der Auslösezunge 13 ein erstes Ende der Auslösezunge sein, wobei ein zweites Ende der Auslösezunge 13 in dem Aufnahmeraum 5 angeordnet ist. Bevorzugt ist das Ende 14 der Auslösezunge 13 außerhalb des Aufnahmeraums 5, also nicht im Aufnahmeraum 5, angeordnet.

Der Abschnitt 16 ist insbesondere ein Bereich entlang der Längserstreckung der Auslösezunge 13. Bevorzugt kann sich der Abschnitt 16 von dem zweiten Ende der Auslösezunge 13 weg in Richtung des ersten Endes bzw. dem Ende 14 der Auslösezunge 13 erstrecken. Insbesondere kann sich der Abschnitt 16 der Auslösezunge 13 von dem zweiten Ende der Auslösezunge 13 weg bis zu maximal 80 Prozent der Länge der Auslösezunge 13 zu dem ersten Ende der Auslösezunge 13 erstrecken. Bevorzugt kann mindestens 10 Prozent, insbesondere mindestens 20 Prozent, vorzugsweise mindestens 40 Prozent, der Länge der Auslösezunge 13 in der Offen-Stellung 3 in dem Aufnahmeraum 5 angeordnet sein. Die Länge der Auslösezunge 13 ist die Länge entlang der Längserstreckung der Auslösezunge 13 inklusive dem Fortsatz 15.

In der Offen-Stellung 3 ist der Fortsatz 15 der Auslösezunge 13 in der Vertiefung 17 eingerastet. In Fig. 8 ist der in der Vertiefung 17 eingerastete Fortsatz 15 gezeigt, wobei die Vertiefung 17 in Fig. 5 und Fig. 9 ersichtlich ist. Durch das Einrasten des Fortsatzes 15 in der Vertiefung 17 wird die Anhängekupplung 1 in der Offen-Stellung 3 fixiert. Durch die Betätigung des Auslösemechanismus wird diese Fixierung gelöst und die Anhängekupplung 1 in die Geschlossen-Stellung 4 gebracht.

Bevorzugt kann die Auslösezunge 13 umfassend Metall ausgebildet, insbesondere aus Metall, sein.

Das erste Bolzenführungsteil 8 ist in Fig. 5 beispielhaft gezeigt. Wie in Fig. 8 und 9 ersichtlich ist, ist das erste Ende 9 des ersten Bolzenführungsteil 8 zumindest mittelbar mit dem Kupplungsbolzen 2 verbunden. Diese mittelbare Verbindung ist in der in Fig. 8 und 9 bevorzugten Ausführungsform der Erfindung über ein Zwischenteil 31 ausgebildet. Das Zwischenteil 31 ist dabei mittels Befestigungsmittel, wie beispielsweise Bolzen oder Schrauben, an dem ersten Bolzenführungsteil 8 und/oder dem Kupplungsbolzen 2 verbunden. Weiters ist ersichtlich, dass das erste Bolzenführungsteil 8 bevorzugt eine erste Führungsschiene 32, insbesondere eine als Langloch ausgebildete Führungsschiene 32, aufweisen kann. Dadurch kann das Führen des Kupplungsbolzens 2 entlang einer Führungsrichtung, insbesondere in Synergie mit dem Zwischenteil 31, erleichtert werden. Die Verbindung des ersten Bolzenführungsteils 8 mit dem Kupplungsbolzen 2 kann anstatt des in Fig. 8 und 9 gezeigten Zwischenteils 31 jedoch auch auf eine andere Art ausgebildet sein. Die Fig. 8 und 9 zeigen daher lediglich eine bevorzugte Ausführungsform der Anhängerkupplung 1.

Bevorzugt kann das erste Bolzenführungsteil 8 an dem ersten Ende 9 eine zweite Führungsschiene 33 zum Führen des Kupplungsbolzens 2 umfassen. Die zweite Führungsschiene 33 kann bevorzugt als Ausnehmung in dem ersten Bolzenführungsteil 8 ausgebildet sein. Dadurch kann insbesondere in Synergie mit dem Zwischenteil 31 und der ersten Führungsschiene 32 das Führen des Kupplungsbolzens 2 entlang der Führungsrichtung des Kupplungsbolzens 2 verbessert und genauer ausbildet werden.

Die schwenkbare Lagerung des ersten Bolzenführungsteils 8 um die erste Drehachse 12 ist in Fig. 9 beispielhaft gezeigt. In Fig. 9 ist auch die schwenkbare Lagerung des zweiten Bolzenführungsteils 18 um die zweite Drehachse 20 beispielhaft gezeigt. Wie im Vergleich von Fig. 9 mit Fig. 8 ersichtlich ist, führt beim Öffnen der Anhängerkupplung 1 das erste Bolzenführungsteil 8 eine Schwenkbewegung gegen den Uhrzeigersinn und das zweite Bolzenführungsteil 18 eine Schwenkbewegung in dem Uhrzeigersinn aus. Beim Schließen der Anhängerkupplung 1, also, wenn die Anhängerkupplung 1 von der Offen-Stellung 3 in die Geschlossen-Stellung 4 überführt wird, drehen sich die Drehrichtungen der beiden Bolzenführungsteile 8, 18 um die jeweiligen Drehachsen 12, 20 um, sodass das erste Bolzenführungsteil 8 eine Schwenkbewegung im Uhrzeigersinn und das zweite Bolzenführungsteil 18 eine Schwenkbewegung gegen den Uhrzeigersinn ausführt. Wie aus den Fig. 8 und 9 deutlich hervorgeht, führt eine Schwenkbewegung des zweiten Bolzenführungsteils 18 zu einer entgegengesetzten Schwenkbewegung des ersten Bolzenführungsteils 8. Eine derartige Koppelung der Schwenkbewegungen der zwei Bolzenführungsteile 8, 18 kann beliebig ausgebildet sein. In den Fig. 8 und 9 ist daher lediglich eine bevorzugte Ausführungsform dieser Koppelung der beiden Bolzenführungsteile 8, 18 gezeigt.

Eine bevorzugte Ausführungsform des zweiten Bolzenführungsteils 18 ist in Fig. 6 beispielhaft gezeigt.

Bevorzugt kann das erste Bolzenführungsteil 8 und/oder das zweite Bolzenführungsteil 18 umfassend Metall ausgebildet, insbesondere aus Metall, sein.

Zum Überführen der Anhängerkupplung 1 von der Geschlossen-Stellung 4 in die Offen-Stellung 3 ist der Hebel 22 notwendig. Der Hebel 22 kann ein Handhebel und/oder ein Fußhebel sein. Der Fußhebel kann bevorzugt auch als Fußpedal bezeichnet werden. Der Hebel 22 ist derart geformt und ausgebildet, dass der Kupplungsbolzen 2 über die Mechanik der Anhängerkupplung 1 bewegt werden kann.

Bevorzugt kann der Fußhebel eine Fußhebelbetätigungsfläche 38 aufweisen. Die Fußhebelbetätigungsfläche 38 ist bevorzugt eine rechteckige oder quadratische Fläche, insbesondere aus Metall oder Kunststoff. Die Fußhebelbetätigungsfläche 38 ist derart ausgebildet, dass der Hebel 22 besonders einfach mit dem Fuß betätigt werden kann. Bevorzugt kann die Fußhebelbetätigungsfläche 38 dazu auch eine Oberflächenstruktur aufweisen, welche den Halt eines Schuhs auf der Fußhebelbetätigungsfläche 38 erhöht. Eine derartige Oberflächenstruktur sowie die Fußhebelbetätigungsfläche 38 sind beispielsweise in den Fig. 3 und 4 ersichtlich.

Der Hebel 22 ist mit dem zweiten Ende 10 des ersten Bolzenführungsteils 8 oder mit dem ersten Ende 19 des zweiten Bolzenführungsteils 18 zumindest mittelbar verbindbar, um die Schwenkbewegung des ersten und des zweiten Bolzenführungsteils 8, 18 auszuführen. Bevorzugt kann der Hebel 22 mittels einer Steckverbindung mit dem zweiten Ende 10 des ersten Bolzenführungsteils 8 oder mit dem ersten Ende 19 des zweiten Bolzenführungsteils 18 zumindest mittelbar verbindbar sein. Bevorzugt kann dazu an dem zweiten Ende 10 des ersten Bolzenführungsteils 8 ein erstes Loch 36 und/oder an dem ersten Ende 19 des zweiten Bolzenführungsteils 18 ein zweites Loch 37 ausgebildet sein. Bevorzugt kann in dem ersten Loch 36 und/oder in dem zweiten Loch 37 ein Zapfen angeordnet sein, mit welchem der Hebel 22 über die Steckverbindung verbindbar ist. Bevorzug kann der jeweilige Zapfen dazu durch das Gehäuse 11 der Anhängerkupplung 1 reichen.

Besonders bevorzugt kann vorgesehen sein, dass an dem Gehäuse 11 entlang der ersten Drehachse 12 eine erste Aufnahme für den Hebel 22 angeordnet ist, dass an dem Gehäuse 11 entlang der zweiten Drehachse 20 eine zweite Aufnahme für den Hebel 22 angeordnet ist, und dass der Hebel 22 wahlweise mit der ersten Aufnahme oder mit der zweiten Aufnahme verbindbar ist. Durch die jeweilige Aufnahme für den Hebel 22 kann der Hebel 22 besonders einfach wahlweise mit dem zweiten Ende 10 des ersten Bolzenführungsteils 8 oder mit dem ersten Ende 19 des zweiten Bolzenführungsteils 18 zumindest mittelbar verbunden werden. Dazu kann die erste Aufnahme und die zweite Aufnahme bevorzugt eine Art Steckverbindung ausbilden. Dabei kann der Hebel 22 insbesondere in der jeweiligen Aufnahme einrasten und bei einer Bewegung des Hebels 22 das erste und das zweite Bolzenführungsteil 8, 18 bewegen.

Besonders bevorzugt kann vorgesehen sein, dass an dem zweiten Ende 21 des zweiten Bolzenführungsteils 18 ein erstes Zahnsegment 24 angeordnet ist, wobei das erste Zahnsegment 24 des zweiten Bolzenführungsteils 18 zum Bewegen des Kupplungsbolzens 2 in ein an dem zweiten Ende 10 des ersten Bolzenführungsteils 8 angeordnetes zweites Zahnsegment 25 eingreift. Das erste Zahnsegment 24 ist in Fig. 6 beispielhaft gezeigt. Das zweite Zahnsegment 25 ist in Fig. 5 beispielhaft gezeigt. Der Eingriff des ersten Zahnsegments 24 in das zweite Zahnsegment 25 zum Bewegen des Kupplungsbolzens 2 ist in den Fig. 8 und 9 ersichtlich. Dadurch kann besonders einfach eine effektive mechanische Verbindung zwischen dem ersten Bolzenführungsteil 8 und dem zweiten Bolzenführungsteil 18 hergestellt werden, welche bei einem Bewegen des jeweiligen Bolzenführungsteils 8, 18 zu einer entgegengesetzten Bewegung des jeweiligen anderen Bolzenführungsteils 8, 18 führt.

Besonders bevorzugt kann vorgesehen sein, dass bei einem Längsschnitt durch die Anhängerkupplung 1 ein Abstand 26 von der zweiten Drehachse 20 bis zum Aufnahmeraum 5 länger ist als ein Abstand 27 von der ersten Drehachse 12 bis zum Aufnahmeraum 5, wenn der jeweilige Abstand 26, 27 entlang einer Geraden 28 gemessen ist, welche Gerade 28 normal zur ersten und zweiten Drehachse 12, 20 verläuft. Dies ist beispielhaft in Fig. 8 ersichtlich. Wie ersichtlich ist, verläuft die Gerade 28 durch die erste und die zweite Drehachse 12, 20. Für den jeweiligen Abstand 26, 27 wird in Bezug auf den Aufnahmeraum 5 der Punkt auf der Geraden 28 genommen, welcher im Aufnahmeraum 5 liegt. Dies ist deutlich in Fig. 8 ersichtlich, wobei der Kupplungsbolzen 2 leicht in den Aufnahmeraum 5 hineinhängt. Der Abstand 26 von der zweiten Drehachse 20 bis zum Aufnahmeraum 5 und der Abstand 27 von der ersten Drehachse 12 bis zum Aufnahmeraum 5 wird dabei von der jeweiligen Drehachse 12, 20 weg bis zu dem Punkt gemessen, welcher der erste Punkt entlang der Geraden 28 ist, welcher in dem Aufnahmeraum 5 liegt. Dadurch kann erreicht werden, dass die zweite Drehachse 20 weiter weg vom Aufnahmeraum 5 liegt, als die erste Drehachse 12, wodurch die Bodenfreiheit bei einer Betätigung der Anhängekupplung, insbesondere mittels eines Fußhebels, zusätzlich erhöht werden kann. Weiters kann dazu auch ein gebogener Fußhebel oder ein anders ausgebildeter Hebel verwendet werden, welcher in den Fig. 3 bis 9 nicht gezeigt ist, wodurch das Öffnen der Anhängerkupplung 1 an Kundenbedürfnisse angepasst werden kann.

Bevorzugt ist die erste Drehachse 12 und/oder die zweite Drehachse 20 in einem Betriebszustand der Anhängerkupplung 1 oder in einem gekuppelten Zustand der Anhängerkupplung 1 oberhalb des Aufnahmeraums 5 angeordnet. Dies ist beispielhaft in den Fig. 8 und 9 ersichtlich. Der Betriebszustand der Anhängerkupplung 1 ist bevorzugt der Zustand, in welchen vorgesehen ist die Anhängerkupplung 1 an der Zugmaschine zu befestigen. In dem Betriebszustand der Anhängerkupplung 1 ist, wenn die Anhängerkupplung 1 an der Zugmaschine befestigt ist, der Aufnahmeraum 5 bevorzugt unterhalb der ersten und/oder der zweiten Drehachse 12, 20 angeordnet. Dadurch kann das Verletzungsrisiko beim Öffnen der Anhängerkupplung 1 weiter reduziert werden, da der Hebel 22 eine Drehbewegung um die erste und/oder die zweite Drehachse 12, 20 ausführen kann, welche oberhalb der mit dem Kupplungsbolzen 2 gekuppelten Zugöse 34 ist.

Besonders bevorzugt kann vorgesehen sein, dass der Hebel 22 ein Fußhebel ist, wobei der Fußhebel mit dem ersten Ende 19 des zweiten Bolzenführungsteils 18 zumindest mittelbar verbunden ist. Dadurch kann die Anhängevorrichtung 1 besonders einfach geöffnet werden. Dadurch kann insbesondere in Synergie mit dem längeren Abstand 26 von der zweiten Drehachse 20 bis zum Aufnahmeraum 5 als dem Abstand 27 von der ersten Drehachse 12 bis zum Aufnahmeraum 5 das Öffnen der Anhängerkupplung 1 zusätzlich erleichtert werden, sowie die Bodenfreiheit an einer Zugmaschine nicht reduziert wird.

Besonders bevorzugt kann vorgesehen sein, dass ein zweiter als Handhebel oder als Fußhebel ausgebildeter Hebel 29 mit dem zweiten Ende 10 des ersten Bolzenführungsteils 8 zumindest mittelbar verbunden ist. Dabei kann insbesondere bei einem Klemmen der Mechanik im Inneren der Anhängerkupplung 1 ein Öffnen der Anhängerkupplung 1 erleichtert werden. Der zweite Hebel 29 ist in den Fig. 3 und 4 beispielhaft gezeigt, wobei der zweite Hebel als Handhebel ausgebildet ist. Dadurch kann beispielsweise ein Fußhebel und ein Handhebel oder zwei Fußhebel auf unterschiedlichen Höhenlagen ausgebildet werden, wodurch das Kuppeln zusätzlich erleichtert werden kann.

Bevorzugt ist der Hebel 22, insbesondere der Handhebel und/oder der Fußhebel, umfassend Metall ausgebildet, vorzugsweise aus Metall.

Besonders bevorzugt kann vorgesehen sein, dass die Anhängerkupplung 1 einen Sensor zum Erkennen der Offen-Stellung 3 und der Geschlossen-Stellung 4 der Anhängerkupplung 1 umfasst. Dadurch kann sichergestellt werden, dass der Anhänger sicher mit der Anhängerkupplung 1 gekuppelt ist, wodurch ein ungewolltes Öffnen der Anhängerkupplung 1, beispielsweise während einer Fahrt mit der Zugmaschine und dem gekuppelten Anhänger, sofort erkannt werden kann. Weiters kann dabei auch bei einem Kuppeln im Dunkeln sichergestellt werden, ob der Anhänger an der Anhängerkupplung 1 richtig gekuppelt ist. Dies erleichtert insofern das Kuppeln, wenn lediglich eine Person das Kuppeln des Anhängers oder des Arbeitsgeräts mit der Zugmaschine durchführt. Dabei kann die Person bei einem Heranfahren der Zugmaschine an den Anhänger oder an das Arbeitsgerät sofort erkennen, ob die automatischen Kuppelung der Zugöse 34 mit der erfindungsgemäßen Anhängerkupplung 1 funktioniert hat. Weiters kann auch beim Arbeiten im Dunkeln sofort erkannt werden, ob eine richtige Kuppelung vorliegt.

Als Sensor kann ein beliebiger Sensor verwendet werden, welcher sich zum Erkennen der Offen-Stellung 3 und der Geschlossen-Stellung 4 eignet. Beispielsweise kann der Sensor eine Lichtschranke sein, welche die Lage des Kupplungsbolzen 2 oder eines der Bolzenführungsteile 8, 18 erkennt.

Bevorzugt kann vorgesehen sein, dass der Sensor in dem Gehäuse 11 der Anhängerkupplung 1 angeordnet ist.

Bevorzugt kann der Sensor in eine an dem Gehäuse 11 angeordnete Aufnahme für den Sensor gesteckt werden. Bevorzugt kann der Sensor von außerhalb des Gehäuses 11 zugänglich sein. Dadurch kann der Sensor einfach ausgetauscht werden, wenn der Sensor beschädigt ist.

Bevorzugt kann die Anhängerkupplung 1 eine Spannvorrichtung, insbesondere eine Hebelfeder 39, umfassen, um den Hebel 22 nach einer Betätigung des Hebels 22 in eine Ausgangslage zurückzubringen. Bevorzugt ist die Spannvorrichtung mit einem Ende an dem Gehäuse 11 und mit einem anderen Ende an dem Hebel 22 verbunden oder befestigt. Dadurch, dass der Hebel 22 mit dem zweiten Bolzenführungsteil 18 oder mit dem ersten Bolzenführungsteil 8 verbunden werden kann, kann die Spannvorrichtung auch auf das erste oder das zweite Bolzenführungsteil 8, 18 wirken, wodurch nach einem Einrasten des Fortsatzes 15 die Anhängerkupplung 1 bevorzugt in einem gespannten Zustand verbleiben kann. Durch das Betätigen der Auslösemechanik wird dabei bevorzugt nicht nur der Kupplungsbolzen 2 von der Offen-Stellung 3 in die Geschlossen-Stellung 4 bewegt, sondern auch der Hebel 22 in die Ausgangslage zurückbewegt.

Bevorzugt kann die Anhängerkupplung 1 zusätzliche Spannvorrichtungen, insbesondere Federn, umfassen, welche in den Fig. 3 bis 9 nicht ersichtlich sind, um die einzelnen Bauteil, wie beispielsweise das erste und das zweite Bolzenführungsteil 8, 18 und/oder die Auslösezunge 13 in eine jeweilige Ausgangslage zu bringen.

Bevorzugt kann die Anhängerkupplung 1 eine Befestigungsplatte 40 aufweisen. Bevorzugt ist die Befestigungsplatte 40 Teil des Gehäuses 11 oder an dem Gehäuse 11 befestigt. Bevorzugt wird die Anhängerkupplung 1 mittels der Befestigungsplatte 40 und Befestigungsmittel an der Zugmaschine befestigt. Dazu kann die Befestigungsplatte 40 bevorzugt Befestigungslöcher 41 zur Aufnahme der Befestigungsmittel, wie beispielsweise Schrauben oder Bolzen, aufweisen. Die Befestigungsplatte 40 und die Befestigungslöcher 41 sind in Fig. 4 beispielhaft gezeigt.

Nachfolgend werden Grundsätze für das Verständnis und die Auslegung gegenständlicher Offenbarung angeführt.

Merkmale werden üblicherweise mit einem unbestimmten Artikel "ein, eine, eines, einer" eingeführt. Sofern es sich aus dem Kontext nicht anders ergibt, ist daher "ein, eine, eines, einer" nicht als Zahlwort zu verstehen.

## Patentansprüche

1. Anhängerkupplung (1) zum Kuppeln mit einer Zugöse (34), umfassend
- einen Kupplungsbolzen (2), wobei der Kupplungsbolzen (2) zwischen einer Offen-Stellung (3) der Anhängerkupplung (1) und einer Geschlossen-Stellung (4) der Anhängerkupplung (1) bewegbar ist,
- einen Aufnahmeraum (5) für die Zugöse (34), wobei in der Geschlossen-Stellung (4) der Kupplungsbolzen (2) von einer ersten Seite (6) des Aufnahmeraums (5) bis zu einer zweiten Seite (7) des Aufnahmeraums (5) reicht, wobei in der Offen-Stellung (3) der Kupplungsbolzen (2) den Aufnahmeraum (5) für die Zugöse (34) freigibt,
- ein erstes Bolzenführungsteil (8), wobei ein erstes Ende (9) des ersten Bolzenführungsteils (8) zumindest mittelbar mit dem Kupplungsbolzen (2) verbunden ist, wobei ein zweites Ende (10) des ersten Bolzenführungsteils (8) zum Bewegen des Kupplungsbolzens (2) gegenüber einem Gehäuse (11) der Anhängerkupplung (1) um eine erste Drehachse (12) schwenkbar gelagert ist,
- eine Auslösezunge (13) zur Betätigung eines Auslösemechanismus der Anhängerkupplung (1), wobei ein Ende (14) der Auslösezunge (13) gegenüber dem Gehäuse (11) der Anhängerkupplung (1) schwenkbar gelagert ist, wobei der Auslösemechanismus durch eine Schwenkbewegung der Auslösezunge (13) betätigbar ist, wobei an dem Ende (14) der Auslösezunge (13) ein Fortsatz (15) angeordnet ist, wobei in der Offen-Stellung (3)
- ein Abschnitt (16) der Auslösezunge (13) in dem Aufnahmeraum (5) angeordnet ist, und
- der Fortsatz (15) in eine an dem zweiten Ende (10) des ersten Bolzenführungsteils (8) angeordnete Vertiefung (17) eingerastet ist und den Kupplungsbolzen (2) in der Offen-Stellung (3) fixiert,
wobei der eingerastete Fortsatz (15) - bei einer Betätigung des Auslösemechanismus der Anhängerkupplung (1) - lösbar ist und die Anhängerkupplung (1) von der Offen-Stellung (3) in die Geschlossen-Stellung (4) überführbar ist,
- ein zweites Bolzenführungsteil (18), wobei ein erstes Ende (19) des zweiten Bolzenführungsteils (18) gegenüber dem Gehäuse (11) um eine zweite Drehachse (20) schwenkbar gelagert ist, wobei ein zweites Ende (21) des zweiten Bolzenführungsteils (18) mit dem zweiten Ende (10) des ersten Bolzenführungsteils (8) derart mechanisch verbunden ist, dass eine Schwenkbewegung des zweiten Bolzenführungsteils (18) um die zweite Drehachse (20) zu einer entgegengesetzten Schwenkbewegung des ersten Bolzenführungsteils (8) um die erste Drehachse (12) führt,
- einen Hebel (22) zum Überführen der Anhängerkupplung (1) von der Geschlossen-Stellung (4) in die Offen-Stellung (3), wobei der Hebel (22) zum Ausführen einer Schwenkbewegung des ersten und des zweiten Bolzenführungsteils (8, 18) mit dem zweiten Ende (10) des ersten Bolzenführungsteils (8) oder mit dem ersten Ende (19) des zweiten Bolzenführungsteils (18) zumindest mittelbar verbindbar ist.

2. Anhängerkupplung (1) nach Anspruch 1, **dadurch gekennzeichnet, dass** an der ersten und an der zweiten Seite (6, 7) des Aufnahmeraums (5) jeweils eine Führungsfläche (23) für die Zugöse (34) angeordnet ist.

3. Anhängerkupplung (1) nach Anspruch 1 oder 2, **dadurch gekennzeichnet, dass** an dem zweiten Ende (21) des zweiten Bolzenführungsteils (18) ein erstes Zahnsegment (24) angeordnet ist, wobei das erste Zahnsegment (24) des zweiten Bolzenführungsteils (18) zum Bewegen des Kupplungsbolzens (2) in ein an dem zweiten Ende (10) des ersten Bolzenführungsteils (8) angeordnetes zweites Zahnsegment (25) eingreift.

4. Anhängerkupplung (1) nach einem der Ansprüche 1 bis 3, **dadurch gekennzeichnet, dass** an dem Gehäuse (11) entlang der ersten Drehachse (12) eine erste Aufnahme für den Hebel (22) angeordnet ist, dass an dem Gehäuse (11) entlang der zweiten Drehachse (20) eine zweite Aufnahme für den Hebel (22) angeordnet ist, und dass der Hebel (22) wahlweise mit der ersten Aufnahme oder mit der zweiten Aufnahme verbindbar ist.

5. Anhängerkupplung (1) nach einem der Ansprüche 1 bis 4, **dadurch gekennzeichnet, dass** bei einem Längsschnitt durch die Anhängerkupplung (1) ein Abstand (26) von der zweiten Drehachse (20) bis zum Aufnahmeraum (5) länger ist als ein Abstand (27) von der ersten Drehachse (12) bis zum Aufnahmeraum (5), wenn der jeweilige Abstand (26, 27) entlang einer Geraden (28) gemessen ist, welche Gerade (28) normal zur ersten und zweiten Drehachse (12, 20) verläuft.

6. Anhängerkupplung (1) nach einem der Ansprüche 1 bis 5, **dadurch gekennzeichnet, dass** der Hebel (22) ein Fußhebel ist, wobei der Fußhebel mit dem ersten Ende (19) des zweiten Bolzenführungsteils (18) zumindest mittelbar verbunden ist.

7. Anhängerkupplung (1) nach Anspruch 6, **dadurch gekennzeichnet, dass** ein zweiter als Handhebel ausgebildeter Hebel (29) mit dem zweiten Ende (10) des ersten Bolzenführungsteils (8) zumindest mittelbar verbunden ist.

8. Anhängerkupplung (1) nach einem der Ansprüche 1 bis 7, **dadurch gekennzeichnet, dass** die Anhängerkupplung (1) einen Sensor zum Erkennen der Offen-Stellung (3) und der Geschlossen-Stellung (4) der Anhängerkupplung (1) umfasst.

9. Kupplungssystem umfassend eine Anhängerkupplung (1) nach einem der Ansprüche 1 bis 8 und eine Zugöse (34), wobei der Kupplungsbolzen (2) der Anhängerkupplung (1) in der Geschlossen-Stellung (4) innerhalb eines Kupplungslochs der Zugöse (34) angeordnet ist.

10. Verfahren zum Kuppeln einer Zugöse (34) mit einer Anhängerkupplung (1) nach einem der Ansprüche 1 bis 8, wobei der Hebel (22) mit dem zweiten Ende (10) des ersten Bolzenführungsteils (8) oder mit dem ersten Ende (19) des zweiten Bolzenführungsteils (18) zumindest mittelbar verbunden wird, wobei durch Betätigung des Hebels (22) der Kupplungsbolzen (2) von der Geschlossen-Stellung (4) der Anhängerkupplung (1) in die Offen-Stellung (3) der Anhängerkupplung (1) überführt wird, wobei die Zugöse (34) in den Aufnahmeraum (5) hineingeführt wird und gegen den Abschnitt (16) der Auslösezunge (13) in dem Aufnahmeraum (5) stößt, wobei durch den Stoß der Zugöse (34) gegen die Auslösezunge (13) eine Schwenkbewegung der Auslösezunge (13) verursacht wird und der eingerastete Fortsatz (15) gelöst wird, wobei durch das Lösen des Fortsatzes (15) der Kupplungsbolzen (2) von der Offen-Stellung (3) in die Geschlossen-Stellung (4) überführt wird und dabei innerhalb eines Kupplungslochs der Zugöse (34) angeordnet wird.
